(19) Europäisches Patentamt
European Patent Office
Office européen des brevets

(11) **EP 1 929 879 B1**

(12) **EUROPEAN PATENT SPECIFICATION**

(45) Date of publication and mention
of the grant of the patent:
**11.05.2016 Bulletin 2016/19**

(51) Int Cl.:
*A23G 9/04* *(2006.01)*        *A23G 9/32* *(2006.01)*
*A23G 9/44* *(2006.01)*

(21) Application number: **07118173.9**

(22) Date of filing: **10.10.2007**

(54) **Frozen confections with low total solids and methods for producing them**

Gefrorene Süsswaren mit niedriger Trockenmasse und Verfahren zu ihrer Herstellung

Confiseries glacées à contenu matière sèche basse et leurs procédés de fabrication

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **05.12.2006 EP 06125455**

(43) Date of publication of application:
**11.06.2008 Bulletin 2008/24**

(73) Proprietors:
• **Unilever PLC
London
EC4Y 0DY (GB)**
Designated Contracting States:
**CY GB IE MT**
• **Unilever N.V.
3013 AL Rotterdam (NL)**
Designated Contracting States:
**AT BE BG CH CZ DE DK EE ES FI FR GR HU IS IT
LI LT LU LV MC NL PL PT RO SE SI SK TR**

(72) Inventors:
• **Aldred, Alexander
Bedford, Bedfordshire MK44 1LQ (GB)**
• **Chamberlain, Dorothy, Margaret
Bedford, Bedfordshire MK44 1LQ (GB)**

(74) Representative: **Keenan, Robert Daniel
Unilever PLC
Unilever Patent Group
Colworth House
Sharnbrook
Bedford, Bedfordshire MK44 1LQ (GB)**

(56) References cited:
**WO-A-96/34537**           **WO-A-97/04663**
**WO-A-2006/007922**        **WO-A-2006/007923**
**US-A1- 2002 001 656**

**Description**

**Technical Field of the Invention**

The present invention relates to frozen confections, in particular to frozen confections having very low solids contents, and methods for producing them.

**Background to the invention**

Water ices, fruit ices, milk ices and similar frozen confections are popular products. These types of frozen confections are essentially made from water and sugar, together with other ingredients such as fruit, milk solids, colours, flavours, stabilizers and acidifying agents. The solids (i.e. all the ingredients other than water), the most part of which is sugars, typically constitute 15 to 25% of the frozen confection. Frozen confections are produced in two different ways: quiescent (static) freezing or freezing under shear (dynamic or "slush" freezing). Quiescent freezing is a process wherein the mix of ingredients is frozen without being agitated, mixed or shaken during freezing, for example by immersing a mould containing the mix in a bath of cold refrigerant. Dynamic freezing typically takes place in an ice cream freezer (a scraped-surface heat exchanger) and can be either a continuous or a batch process. The mix is placed in a barrel with refrigerated walls which are scraped by blades attached to a rotating dasher. The scraper blades remove ice crystals from the barrel walls while the dasher shears the mix. The partially frozen mix must be removed from the barrel before too much ice is formed. In a batch process, too much ice can result in uneven mixing and an inhomogeneous product. In a continuous process, too much ice results in inconsistent flow, poor process control and in some cases the barrel can "ice up" or "freeze up", wherein large lumps of ice form in the barrel. These can damage the scraper blades, prevent the dasher from rotating and even cause motor burn out. To miminize the risk of this, the partially frozen mix is typically drawn from the freezer at a relatively warm temperature of about -3°C, and then usually further frozen quiescently ("hardened").

There is now a demand from consumers for frozen confections containing reduced amounts of sugar, for example because of health concerns relating to dental health, obesity, and diseases such as type 2 diabetes. The importance of limiting the content of sugars in a healthy diet has recently been highlighted by a Joint WHO/FAO Expert Committee (see "Diet, nutrition and the prevention of chronic diseases" - Report of a Joint WHO/FAO Expert Consultation, WHO Technical Report Series 916, WHO, Geneva, 2003).

Simply lowering the sugar content (and hence the total solids content) of frozen confections results in products that are hard and icy. Such products are generally not appreciated by the consumer. Dynamic freezing (for example in a scraped surface heat exchanger) allows simultaneous aeration and freezing, resulting for example in less icy products. However, it is very difficult to process mixes that have low solids contents (e.g. less than 10 wt%) in a scraped surface heat exchanger. The ice content of such mixes increases very rapidly as the temperature is reduced below the freezing point. For example, an 8% aqueous solution of sucrose has a freezing point of -0.5°C; the equilibrium ice content is 45% at -1°C, 68% at -2°C and 75% at -3°C. Thus in this region a small change in temperature results in a large change in ice content. This makes low solids mixes very sensitive to the process conditions in a scraped surface heat exchanger; in particular it makes them very susceptible to 'icing up' of the barrel. Therefore, there remains a need for an improved method for producing frozen confections which contain low amounts of sugars.

**Tests and Definitions**

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in Ice Cream, 6th Edition, Robert T. Marshall, H. Douglas Goff and Richard W. Hartel (2003), Kluwer Academic/Plenum Publishers. All percentages, unless otherwise stated, refer to the percentage by weight, with the exception of percentages cited in relation to the overrun.

Total Solids Content

The total solids content of a frozen confection is the dry weight of the confection, i.e. the sum of the weights of all the ingredients other than water, expressed as a percentage of the total weight. It is measured by the oven drying method as described in Ice Cream, 6th Edition, Marshall et al. (2003) p296.

Ove rru n

Overrun is defined by the following equation.

$$OR = \frac{\text{density of frozen aerated product} - \text{density of premix at ambient temp}}{\text{density of premix at ambient temp}} \times 100$$

It is measured at atmospheric pressure.

Total Ice Content

Total ice content is measured by adiabatic calorimetry as described by de Cindio and Correra in the Journal of Food Engineering (1995) 24 pp.405-415. Calorimetric techniques, particularly adiabatic calorimetry, have proved to be the most suitable, since they can be used on complex food systems, and do not require any other information about the food, such as composition data, unlike some of the other techniques. The large measured sample size (80g) allows measurement of heterogeneous samples such as those claimed.

Frozen Particle Size

Frozen particles are 3-dimensional objects, often of an irregular shape. However, methods for viewing and measuring such particles are often 2-dimensional (see below). Consequently, measurements are often made solely in one or two dimensions and converted to the required measurement. The size of a particle can be calculated from an area size measurement by assuming a regular shape for the particle and calculating the size or volume on that basis. By "area size", we mean the maximum area as seen in the image plane (i.e. when viewed using optical imaging). Typically, the assumed regular shape is a sphere and therefore the size is $2 \times \sqrt{\text{area size}/\pi}$. The frozen particle size distribution of a frozen product can be measured as follows.

*Sample Preparation*

All equipment, reagents and products used in sample preparation are equilibrated to the measurement temperature (-10°C) for at least 10 hours prior to use.

A 10 g sample of the frozen product is taken and added to 50 $cm^3$ of a dispersing solution consisting of 20% ethanol in aqueous solution, and gently agitated for 30s or until the sample has completely dispersed into single particles. The aqueous ethanol dispersing solution can be designed to match the measurement conditions of the experimental system: see 'Concentration properties of aqueous solutions: conversion tables' in "Handbook of Chemistry and Physics", CRC Press, Boca Raton, Florida, USA. The whole ice / ethanol / water mix is then gently poured into a 14 cm diameter Petri dish, ensuring complete transfer, and again gently agitated to ensure even dispersal of the ice particles in the dish. After 2 s (to allow for cessation of particle movement) an image is captured of the full dish. Ten replicate samples are taken for each product.

*Imaging*

Images can be acquired using a domestic digital camera (e.g. JVC KY55B) with its macro-lens assembly as supplied. The camera is selected to provide sufficient magnification to reliably image particles with an area size from 0.5 $mm^2$ to greater than 50 $mm^2$. For imaging, the Petri dish containing the sample is placed on a black background and illuminated at low angle (Schott KL2500 LCD) to enable the frozen particles to be easily visualised as bright objects.

*Analysis*

Image analysis is conducted using the Carl Zeiss Vision KS400 Image analysis software (Imaging Associates Ltd, 6 Avonbury Business Park, Howes Lane, Bicester, OX26 2UA) to determine the area size of each particle in the image. User intervention is required to remove from the image: the edge of the Petri dish, air bubbles, coincidentally connected frozen particles and any residual undispersed material. Of these features, only the apparent connection between frozen particles is relatively frequent. The 10 samples taken allow for the sizing of at least 500, and typically several thousand, particles for each product characterised. From this image analysis it is possible to calculate the range and mean of the diameters of the frozen particles.

Ice Crystal Size

The microstructure of samples is visualised by Low Temperature Scanning Electron Microscopy (LTSEM). This allows small ice crystals to be observed. Samples of frozen product are cooled to -80°C on dry ice prior to SEM sample preparation. A sample section (6mm x 6mm x 10mm) is cut and mounted on a sample holder using OCT™ at the point of freezing. OCT™ is an aqueous embedding medium used primarily for cryotome preparation of material for light microscopy. It is also called 'tissue tek' and is supplied by Agar Scientific. The advantage of using OCT rather than water to mount the samples for electron microscopy is that when OCT freezes it changes to opaque from transparent allowing visual identification of the freezing point. Identification of this point allows the sample to be mounted using a liquid at its coldest just prior to solidifying which will give strong support. The sample and holder are plunged into liquid nitrogen slush and transferred to a low temperature preparation chamber (CT1500HF, Oxford Instruments, Old Station Way, Eynsham Whitney, Oxon, OX29 4TL, UK): The chamber is under vacuum, approximately $10^{-4}$- $10^{-5}$ mbar, and the sample is warmed to -90°C. Ice is slowly etched at this temperature under constant vacuum for 2-3 minutes to reveal surface details not caused by the ice itself. Once etched, the sample is cooled to -110°C to prevent further sublimation, and coated with gold using argon plasma. This process also takes place under vacuum with an applied pressure of $10^{-1}$ millibars and current of 5 milliamps for 30 sec. The sample is then transferred to a conventional Scanning Electron Microscope (JSM 5600 - Jeol UK Ltd, Jeol House, Silvercourt Watchmead, Welwyn Garden City, Herts, AL7 1LT, UK), fitted with an Oxford Instruments cold stage at a temperature of -150°C. The sample is examined and areas of interest captured via digital image acquisition software.

**Brief Description of the Invention**

We have now found that frozen confections having a solids content of less than 10 wt% can be produced using a scraped surface heat exchanger, by passing a mix having a relatively high solids content through the scraped surface heat exchanger and subsequently adding ice or other frozen particles having a low solids content. Accordingly, in a first aspect the present invention provides a process for making a frozen confection having a total solids content of less than 10% by weight of the frozen confection, the process comprising:

a) preparing a mix of ingredients comprising water and having a total solids content of at least 12% by weight of the mix;
b) partially freezing the mix in a dynamic freezer;
c) drawing the partially frozen mix from the freezer;
d) combining the partially frozen mix with an amount of frozen particles to form a frozen confection, wherein:

- the total solids content of the frozen particles is less than 1% by weight of the frozen particles;
- the mean size of the frozen particles is greater than 0.5mm; and
- the amount of frozen particles is such that the total solids content of the frozen confection is less than 10% by weight of the frozen confection.

As well as permitting dynamic freezing, this process has the further advantage that by using a scraped surface heat exchanger, it is possible to aerate the mix, which results in less icy products.
Preferably the solids content of the frozen confection is less than 8 wt%.
Preferably the solids content of the frozen particles is less than 0.5 wt%, more preferably the frozen particles are ice.
Preferably the amount of frozen particles is from 10 to 70% by weight of the frozen confection.
Preferably the mean size of the frozen particles is reduced after they have been combined with the partially frozen mix.
Preferably the frozen particles in the frozen confection have a mean size of less than 20mm, more preferably from 1 to 5mm.
Preferably in step (b) the mix is aerated, so that the frozen confection has an overrun of at least 20%.
Preferably the dynamic freezer is a continuous freezer.
Preferably, after step (d) frozen confection is further frozen to a temperature of below -10°C.
In a second aspect, the present invention provides a frozen confection having a total solids content of less than 10%, comprising: from 10 to 70% by weight of frozen particles having a total solids content of less than 1% by weight of the frozen particles and a mean size of from 0.5 to 20mm; and from 10 to 70% by weight of ice crystals having a mean size less than 0.25 mm.
Preferably the solids content of the frozen confection is less than 8 wt%.
Preferably the frozen particles have a mean size of from 1 to 5mm.
Preferably the ice crystals have a mean size of less than 0.1mm.
Preferably the frozen confection has an overrun of at least 20%.
Preferably the frozen particles are ice.
In a related aspect the present invention provides a frozen confection obtainable by the method of the invention. Also provided is a frozen confection obtained by the method of invention.

## Detailed Description of the Invention

### Frozen confection

The frozen confection has a total solids content of less than 10% by weight of the frozen confection, preferably less than 9%, most preferably less than 8%. The lower the total solids content (and hence sugar content), the more attractive is the product to health conscious consumers. Frozen confections having these low total solids contents have ice contents at -18°C of greater then 80% and may be as high as 85% or greater.

### Mix

The mix has a total solids content of at least 12% by weight of the mix, preferably at least 14%. Preferably also the mix has a solids content of less than 40%, more preferably less then 30% or 25%, most preferably less than 20% by weight of the mix. Mixes having at least this solids content can be processed in a scraped surface heat exchanger. Furthermore, when the mix has a solids content in this range, the corresponding amount of frozen particles required to produce a final frozen confection with a solids content of less than 10% is within a convenient range i.e. about 10% to 70% by weight of the frozen confection.

Mixes typically contain, in addition to water and sugars, ingredients conventionally found in water ices, fruit ices and milk ices, such as fruit (for example in the form of fruit juice or fruit puree) milk solids, colours, flavours, stabilizers and acidifying agents. The term "sugars" is meant to include monosaccharides (e.g. dextrose, fructose), disaccharides (e.g. sucrose, lactose, maltose), oligosaccharides containing from 3 to ten monosaccharide units joined in glycosidic linkage (e.g. maltotriose), corn syrups with a dextrose equivalent (DE) of at least 10, and sugar alcohols (e.g. erythritol arabitol, xylitol, sorbitol, glycerol, mannitol, lactitol and maltitol). Of the ingredients present in frozen confections, sugars provide most of the freezing point depression, and hence determine the ice content of the confection. In simple frozen confection formulations, such as basic water ices, the solids content is essentially made up of the sugars, with only small amounts of other ingredients (e.g. colours, flavours, stabilisers). The non-sugar ingredients have only a very small freezing point depression effect, since firstly they are only present in small amounts, and secondly, they are usually higher molecular weight molecules than sugars. In more complex formulations, such as milk ices and fruit ices, non-sugar ingredients make up a larger proportion of the total solids. Thus for example milk ices contain a significant amount of milk protein, and fruit ices may contain fibre from fruit puree. Since the non-sugar ingredients have little effect on the ice content, it can be more difficult to process a very low solids (e.g. 12%) milk ice or fruit ice mix than a water ice mix with the same solids content, but which contains more sugar. Thus for milk ice and fruit ice mixes, it is preferred that the mix has a solids content of at least 14%.

Mixes can be prepared by conventional methods known in the art.

### Dynamic Freezing

The mix is partially frozen in a dynamic freezer. By partial freezing, it is meant that part, but not all, of the water in the mix is frozen into ice crystals. The term "dynamic freezer" means a freezer in which the mix is frozen under shear, (e.g. with agitation or mixing). Thus dynamic freezers include conventional ice cream freezers (scraped-surface heat exchangers). Scraped-surface heat exchangers are described for example in "Ice Cream", 6th edition, pages 186-205. The dynamic freezing process produces small ice crystals, i.e. having a mean size of less than 0.25 mm, in particular less than 0.1 mm.

During the dynamic freezing step, the mix may be aerated with air or another food grade gas, such as carbon dioxide. Preferably the frozen confection has an overrun of at least 20%, more preferably at least 30%, most preferably at least 50%. Aeration results in less icy frozen confections. Preferably the overrun is less than 150%, more preferably less than 120%, most preferably less than 100%.

### Frozen Particles

The frozen particles have a low total solids content, less than 1%. In a preferred embodiment, the frozen particles are ice. In another embodiment a small amount of solids is present, so that, for example, the frozen particles are flavoured or coloured. In this case the total solids content is less than 0.5 wt%, preferably less than 0.1 wt%. The lower the solids content of the frozen particles, the lower the solids content of the final product for a given mix total solids, or equivalently, the higher the mix total solids (and hence the better the processability) for a given product total solids.

The frozen particles can be produced from water or aqueous solutions in any suitable manner, for example by freezing drops on a drum freezer; by direct immersion of droplets in liquid nitrogen, for example as described in EP 1,348,341; by moulding small ice pieces, e.g. as described in US 5,738,889; or by using a fragmented ice maker such as the Ziegra Ice machine ZBE 4000-4, ZIEGRA-Eismaschinen GmbH, Isemhagen, Germany; a fragmented ice maker is described in US 4,569,209.

Combining the frozen particles and the partially frozen mix

To produce the frozen confection, the frozen particles are combined with the partially frozen mix. This can be achieved for example by feeding the frozen particles through a fruit feeder into the partially frozen mix as it exits the dynamic freezer.

The frozen particles are preferably added in an amount such that they constitute at least 10%, more preferably at least 20%, most preferably at least 30% by weight of the frozen confection. The greater the amount of added frozen particles as a percentage of the frozen confection, the lower the solids content of the frozen confection for a given solids content of the partially frozen mix. For example, adding 50% ice particles means that the total solids content of the frozen confection is half that of the mix. Preferably the frozen particles are added in an amount such that they constitute at most 70%, more preferably at most 60%, most preferably at most 55% by weight of the frozen confection. We have found that it is difficult to obtain a product in which the frozen particles are evenly distributed in the partially frozen mix when the frozen particles are added in larger amounts.

The total solids content of the frozen confection ($TS_{confection}$) is given by:

$$TS_{confection} = \left(f \times TS_{particles} + (100 - f) \times TS_{mix}\right)/100$$

where $TS_{mix}$ is the total solids content of the mix, $TS_{particles}$ is the total solids content of the particles, and f is the amount of frozen particles expressed as a weight percentage of the frozen confection. Some examples of suitable values are given in Table 1.

| $TS_{mix}$ | $TS_{particles}$ | f | $TS_{confection}$ |
|---|---|---|---|
| 13 | 0 | 38 | 8 |
| 16 | 0 | 50 | 8 |
| 16 | 0.5 | 50 | 8.25 |
| 13 | 0 | 25 | 9.75 |
| 15 | 0 | 35 | 9.75 |
| 18 | 0.5 | 50 | 9.25 |
| 28 | 0 | 65 | 9.8 |

The frozen particles in the frozen confection have a mean size of greater than 0.5mm, preferably greater than 1 mm. Preferably their mean size is less than 20mm, more preferably less than 10 mm, most preferably less than 5mm. Frozen particles of this size are large enough to be perceived individually on consumption and are a convenient size for processing.

Frozen confections containing relatively large ice particles are known, for example to make soft products as disclosed in EP 1,051,913 A, WO 06/007922 and WO 06/007923. However, these products have a total solids content of greater than 10% by weight of the frozen confections, so the problem addressed by the present invention does not arise.

The frozen particles are preferably at a temperature of about -0.5°C or below when combined with the partially frozen mix, which is normally, but not necessarily at a lower temperature, e.g. -2°C or below, typically below -3°C. The temperature difference between the frozen particles and the partially frozen mix should be small, i.e. less than about 5°C, preferably less than 3°C so as to avoid melting of frozen particles or ice crystals.

A frozen confection containing frozen particles can be produced either by adding frozen particles of the required size, or alternatively by initially adding larger particles to the partially frozen mix and subsequently mechanically reducing the size of these particles to the required size. Such a subsequent size reduction step provides a convenient method of ensuring that the frozen particles in the frozen confection have a mean size within the preferred ranges. The size reduction step can be performed for example by passing the mix through a constriction of a size, d, greater than 0.5 mm and less than 20 mm, preferably from 1 to 10 mm, more preferably from 1 to 5 mm: for example, by passing the mix through a pump comprising an outlet of size d, and/or passing the slush between parallel plates separated by a distance d and wherein one of the plates rotates relative to the other. A suitable size-reduction device (a crushing pump) which allows for in-line reduction of particle size is described in WO 06/007922.

In addition to the frozen particles, the frozen confection also contains ice crystals. The ice crystals are formed in the dynamic freezing step. The term "ice crystals" therefore does not refer to ice crystals that form part of the frozen particles, but only to the ice crystals that are generated during the dynamic freezing step. The ice crystals are distinguished from the frozen particles by their size: they are substantially smaller than the frozen particles, i.e. less than 0.25mm. Preferably the ice crystals have a mean size of less than 0.1 mm. Ice crystals formed in a scraped surface heat exchanger are typically 0.05mm in size.

Since the frozen confections have a total ice content at -18°C of greater than 80% (by weight of the frozen confection) and since the frozen confections preferably contain frozen particles in an amount of from 10 to 70% (by weight of the frozen confection), accordingly the ice crystals preferably constitute from 70 to 10% (by weight) of the frozen confection, more preferably from 20 to 60%, most preferably from 30 to 50%.

Preferably after step (d) the temperature of the frozen confection is lowered to below -10°C, more preferably to a typical storage temperature, such as -18°C or below, e.g.-25°C. For example, the frozen confection may be placed in moulds for further freezing (during which sticks may be inserted). The frozen confection may also be subjected to a hardening step, such as blast freezing (e.g. at -35°C), prior to storage. A further advantage of the method of the invention is that by increasing the solids content of the mix, the temperature at which the partially frozen confection is drawn from the freezer can be lowered, so that less heat has to be removed subsequently. This is particularly useful if the frozen confection is subsequently frozen in moulds, as the frozen confection has a shorter moulding time and hence the throughput of the production line is increased.

Before serving, the product is generally tempered back to at least -18°C. In one embodiment, the product is warmed up to -10°C or above and served as a drink.

The present invention will now be further described with reference to the following examples, which are illustrative only and non-limiting, and the figure, wherein:

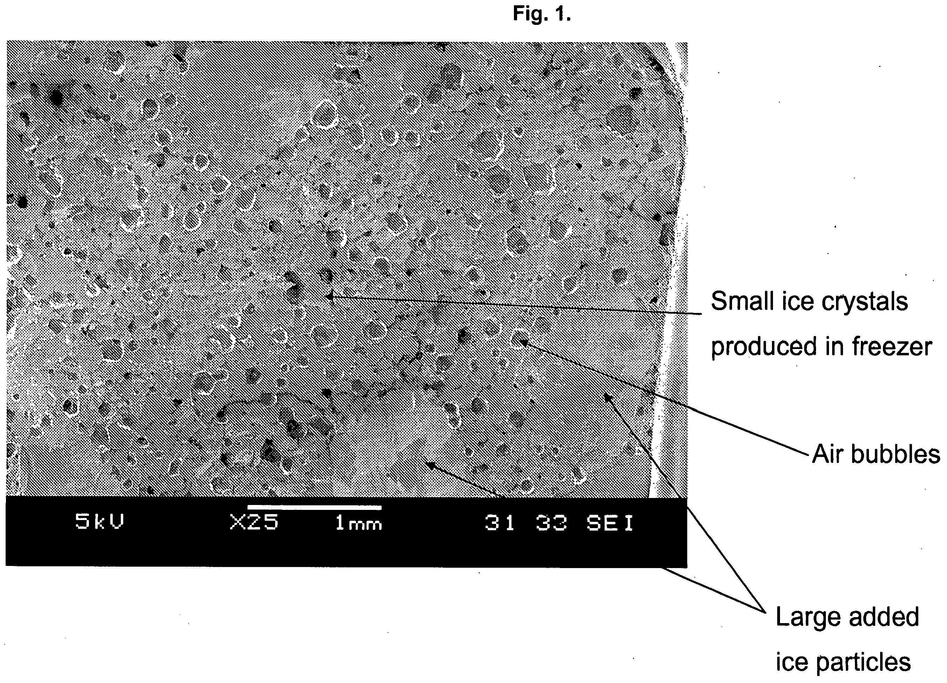

Figure 1 shows a scanning electron micrograph of a frozen confection according to the invention.

**Examples**

Example 1 illustrates a simple model frozen confection based on sucrose solutions of three different concentrations: 7.9, 12 and 15.7 wt%. Examples 2 - 4 illustrate various different frozen confections (water ices and milk ices) according to the invention. The process by which the products were produced was the same in each case, as described below. Within each example, all of the final products have the same total solids content after the frozen particles have been added in.

All ingredients except for the flavour and acids (where used) were combined in an agitated heated mix tank and subjected to high shear mixing at a temperature of 65°C for 2 minutes. The resulting mix was then passed through an homogeniser at 150 bar and 70°C, pasteurised at 83°C for 20 s and then rapidly cooled to 4°C using a plate heat exchanger. The flavour and acids (where used) were then added to the mix which was then held at 4°C in a stirred tank for around 4 hours prior to freezing.

The mix was frozen using a Crepaco W04 ice cream freezer (a scraped surface heat exchanger) at a mix flow rate of about 100 litres / hour, an extrusion temperature of -1 to-6°C and an overrun at the freezer outlet of 0 to 80%. An open dasher (series 80) and a closed dasher (series 15) were used for aerated and unaerated products respectively.

A Ziegra Ice machine ZBE 4000-4 (ZIEGRA-Eismaschinen GmbH, Isernhagen, Germany) was used to produce ice particles measuring approximately 5 x 5 x 5-7 mm. The ice particles were fed into the stream of partially frozen mix as it left the freezer, using a fruit feeder Hoyer FF4000 (vane type). The flow rate of the partially frozen mix from the freezer and the rate of ice addition were controlled to give the desired amount of large ice particles.

The resulting mixture was then passed through a size-reduction device, as described in WO 06/007922. The size-reduction device ensures that the ice particles passing through the device have a maximum length of less than a certain size in at least one dimension. This size (known as the gap size) was varied from 1 to 4 mm.

Example 1: Model solutions

Mixes were prepared with the following formulations:

| Ingredient (wt %) | 1A | 1B | 1C |
|---|---|---|---|
| Sucrose | 7.5 | 11.5 | 15 |
| Hygel | 0.2 | 0.31 | 0.4 |
| Locust bean gum | 0.2 | 0.31 | 0.4 |

(continued)

| Ingredient (wt %) | 1A | 1B | 1C |
|---|---|---|---|
| Water | 92.1 | 87.8 | 84.2 |
| Total solids | 7.9 | 12 | 15.7 |
| Added Ice | 0 | 35 | 50 |
| Processability | N | Y | Y |
| Hygel is a milk protein-based aerating agent, obtained from Kerry Biosciences. | | | |

The amounts of ice (as a wt % of the final product) added into the partially frozen mixes of formulations 1B and 1C in order to make the total solids content of the final product the same in each case (i.e. that of formulation 1A) are also shown. The ice content at -18°C was calculated as 88% by weight of the frozen confection, using the freezing curve for sucrose solutions as described for example on pages 28-29 of "The Science of Ice Cream", C. Clarke, RSC, Cambridge, UK, 2004.

Products were prepared from mixes 1B and 1C with 0 and 60% overrun, using gap sizes of 1 mm and 4 mm. Example 1A could not be processed even using the minimum amount refrigeration. The mix has such a low solids content that a large amount of ice was generated on the barrel wall. The ice build up caused the dasher to skid, and resulted in large variations in the torque (motor load) and barrel pressure. This results in an uncontrollable process and erratic extrusion of the product. Examples 1B and 1C, which have mix solids contents of at least 12%, had a less rapid build up of ice, so that the dasher had time to remove the ice from the barrel wall, resulting in a consistent and controllable process. The partially frozen mix was extruded from the freezer as an ice slush that could be dosed into containers such as cups or ice lolly moulds.

Example 2: Water ice

Mixes were prepared with the following formulations and amounts of added ice:

| Ingredient (wt %) | 2A | 2B | 2C | 2D |
|---|---|---|---|---|
| Glycerol | 4.15 | 6.39 | 7.55 | 9.23 |
| Maltodextrin DE10 | 2.85 | 4.39 | 5.18 | 6.33 |
| Stabiliser | 0.152 | 0.234 | 0.276 | 0.338 |
| Acesulfame | 0.018 | 0.028 | 0.033 | 0.040 |
| Aspartame | 0.027 | 0.042 | 0.049 | 0.060 |
| Citric Acid | 0.608 | 0.935 | 1.11 | 1.35 |
| Ascorbic Acid | 0.012 | 0.018 | d.022 | 0.027 |
| Water | 92.2 | 88.0 | 85.8 | 82.6 |
| Total solids | 7.6 | 12.5 | 14.7 | 17.0 |
| Added Ice | 0 | 35 | 45 | 55 |
| Processability | N | Y | Y | Y |

The ice content at -18°C was 85% by weight of the frozen confection. Unaerated products were prepared from mixes 2B - 2D, and an aerated product with 30% overrun was prepared from mix 2B, using gap sizes of 1 mm and 3 mm. Example 2A produced large variations in the torque (motor load) and barrel pressure resulting in an uncontrollable process and erratic extrusion of the product, whereas examples 2B - 2D presented no processing difficulties.

The microstructure of the frozen confection prepared from mix 2B with 30% overrun is shown in Figure 1. The image shows small ice crystals produced in the freezer (approximately 0.05 - 0.1mm) and large added ice particles (approximately 1mm in size). The darker objects are air bubbles produced in the freezer as a result of the incorporation of 30% overrun.

Example 3: Water ice

Mixes were prepared with the following formulations and amounts of added ice:

| Ingredient (wt %) | 3A | 3B |
|---|---|---|
| Fructose | 7.57 | 18.9 |
| Locust bean gum | 0.12 | 0.3 |
| Tea flavour | 0.110 | 0.276 |
| Salt | 0.0212 | 0.053 |
| Green Colour | 0.002 | 0.005 |
| Water | 92.2 | 80.4 |
| Total solids% | 7.8 | 19.5 |
| Added Ice | 0 | 40 |
| Processability | N | Y |

The ice content at -18°C was 86.5% by weight of the frozen confection. Products were prepared from mix 3B with 40% overrun, using gap sizes of 1, 2 and 3 mm. Example 3A did not process controllably, in a similar manner to examples 1A and 2A, whereas example 3B processed controllably to produce a dosable ice slush.

Example 4: Milk ice

Mixes were prepared with the following formulations and amounts of added ice:

| Ingredient (wt %) | 4A | 4B | 4C |
|---|---|---|---|
| Water | 60.4 | 85.1 | 78.6 |
| - Skim Milk Powder | 9.65 | 14.9 | 21.4 |
| Total solids% | 9.3 | 14.3 | 20.5 |
| Added Ice | 0 | 35 | 55 |
| Processability | N | Y | Y |

Skim milk powder has a moisture (water) content of about 4%, so the amount of solids is slightly less than the amount of skim milk powder in the mix.

The ice content at -18°C was 86% by weight of the frozen confection. Unaerated products were prepared from mixes 4B and 4C, using a gap size of 1 and 3mm. Example 4A did not process controllably, in a similar manner to examples 1A and 2A, whereas examples 4B and 4C processed controllably to produce a dosable ice slush.

**Claims**

1.  A process for making a frozen confection having a total solids content of less than 10% by weight of the frozen confection, the process comprising:

    a) preparing a mix of ingredients comprising water and having a total solids content of at least 12% by weight of the mix;
    b) partially freezing the mix in a dynamic freezer;
    c) drawing the partially frozen mix from the freezer;
    d) combining the partially frozen mix with an amount of frozen particles to form a frozen confection, wherein:

        • the total solids content of the frozen particles is less than 1% by weight of the frozen particles;
        • the mean size of the frozen particles is greater than 0.5mm; and

• the amount of frozen particles is chosen such that the total solids content of the frozen confection is less than 10% by weight of the frozen confection.

2. A process according to claim 1 wherein the solids content of the frozen confection is less than 8 wt%.

3. A process according to claim 1 or claim 2 wherein the solids content of the frozen particles is less than 0.5 wt%.

4. A process according to claim 3 wherein the frozen particles are ice.

5. A process according to any preceding claim wherein the amount of frozen particles is from 10 to 70% by weight of the frozen confection.

6. A process according to any preceding claim wherein the mean size of the frozen particles is reduced after they have been combined with the partially frozen mix.

7. A process according to any preceding claim wherein the frozen particles in the frozen confection have a mean size of less than 20mm.

8. A process according to claim 7 wherein the frozen particles in the frozen confection have a mean size of from 1 to 5mm.

9. A process according to any preceding claim wherein in step (b) the mix is aerated, so that the frozen confection has an overrun of at least 20%.

10. A process according to any preceding claim wherein the dynamic freezer is a continuous freezer.

11. A process according to any preceding claim wherein after step (d) frozen confection is further frozen to a temperature of below -10°C.

12. A frozen confection having a total solids content of less than 10%, comprising at - 18ºC: from 10 to 70% by weight of frozen particles having a total solids content of less than 1% by weight of the frozen particles and a mean size of from 0.5 to 20mm; and from 10 to 70% by weight of ice crystals having a mean size less than 0.25 mm.

13. A frozen confection according to claim 12 having a total solids content of less than 8 wt%.

14. A frozen confection according to claim 12 or claim 13 wherein the frozen particles have a mean size of from 1 to 5mm.

15. A frozen confection according to any of claims 12 to 14 wherein the ice crystals have a mean size of less than 0.1 mm.

16. A frozen confection according to any of claims 12 to 15 having an overrun of at least 20%.

17. A frozen confection according to any of claims 12 to 16 wherein the frozen particles are ice.

**Patentansprüche**

1. Verfahren zur Herstellung einer gefrorenen Süßware mit einem Gesamtfeststoffgehalt von weniger als 10 Gew.-% der gefrorenen Süßware, wobei das Verfahren umfasst:

a) Herstellen einer Mischung von Inhaltsstoffen, umfassend Wasser und mit einem Gesamtfeststoffgehalt von mindestens 12 Gewichts-% der Mischung,
b) teilweises Gefrieren der Mischung in einem dynamischen Gefrierapparat,
c) Abziehen der teilweise gefrorenen Mischung von dem Gefrierapparat,
d) Kombinieren der teilweise gefrorenen Mischung mit einer Menge von gefrorenen Partikeln, um eine gefrorene Süßware zu bilden, wobei:

• der Gesamtfeststoffgehalt der gefrorenen Partikel weniger als 1 Gewichts-% der gefrorenen Partikel beträgt,
• die mittlere Größe der gefrorenen Partikel größer als 0,5 mm ist und

• die Menge der gefrorenen Partikel derartig ausgewählt wird, dass der Gesamtfeststoffgehalt der gefrorenen Süßware weniger als 10 Gewichts-% der gefrorenen Süßware beträgt.

2.  Verfahren nach Anspruch 1, wobei der Feststoffgehalt der gefrorenen Süßware weniger als 8 Gewichts-% beträgt.

3.  Verfahren nach Anspruch 1 oder 2, wobei der Feststoffgehalt der gefrorenen Partikel weniger als 0,5 Gew.-% beträgt.

4.  Verfahren nach Anspruch 3, wobei die gefrorenen Partikel Eis darstellen.

5.  Verfahren nach irgendeinem vorhergehenden Anspruch, wobei die Menge der gefrorenen Partikel 10 bis 70 Gewichts-% der gefrorenen Süßware beträgt.

6.  Verfahren nach irgendeinem vorhergehenden Anspruch, wobei die mittlere Größe der gefrorenen Partikel reduziert wird, nachdem sie mit der teilweise gefrorenen Mischung kombiniert worden sind.

7.  Verfahren nach irgendeinem vorhergehenden Anspruch, wobei die gefrorenen Partikel in der gefrorenen Süßware eine mittlere Größe von weniger als 20 mm aufweisen.

8.  Verfahren nach Anspruch 7, wobei die gefrorenen Partikel in der gefrorenen Süßware eine mittlere Größe von 1 bis 5 mm aufweisen.

9.  Verfahren nach irgendeinem vorhergehenden Anspruch, wobei in Schritt (b) die Mischung belüftet wird, so dass die gefrorene Süßware einen Überlauf von mindestens 20% aufweist.

10. Verfahren nach irgendeinem vorhergehenden Anspruch, wobei der dynamische Gefrierapparat ein kontinuierlicher Gefrierapparat ist.

11. Verfahren nach irgendeinem vorhergehenden Anspruch, wonach nach Schritt (d) die gefrorene Süßware des Weiteren auf eine Temperatur unter -10°C gefroren wird.

12. Gefrorene Süßware mit einem Gesamtfeststoffgehalt von weniger als 10%, umfassend bei -18°C: von 10 bis 70 Gewichts-% gefrorene Partikel mit einem Gesamtfeststoffgehalt von weniger als 1 Gewichts-% der gefrorenen Partikel und mit einer mittleren Größe von 0,5 bis 20 mm und von 10 bis 70 Gewichts-% Eiskristalle einer mittleren Größe von weniger als 0,25 mm.

13. Gefrorene Süßware nach Anspruch 12 mit einem Gesamtfeststoffgehalt von weniger als 8 Gew.-%.

14. Gefrorene Süßware nach Anspruch 12 oder 13, wobei die gefrorenen Partikel eine mittlere Größe von 1 bis 5 mm aufweisen.

15. Gefrorene Süßware nach irgendeinem der Ansprüche 12 bis 14, wobei die Eiskristalle eine mittlere Größe von weniger als 0,1 mm aufweisen.

16. Gefrorene Süßware nach irgendeinem der Ansprüche 12 bis 15 mit einem Überlauf von mindestens 20%.

17. Gefrorene Süßware nach irgendeinem der Ansprüche 12 bis 16, wobei die gefrorenen Partikel Eis darstellen.

**Revendications**

1.  Procédé pour préparer une friandise congelée ayant une teneur totale en extrait sec inférieure à 10 % en poids de la friandise congelée, le procédé comprenant :

    a) la préparation d'un mélange d'ingrédients comprenant de l'eau et ayant une teneur totale en extrait sec d'au moins 12 % en poids du mélange ;
    b) congeler partiellement le mélange dans un congélateur dynamique ;
    c) retirer du congélateur le mélange partiellement congelé ;
    d) combiner le mélange partiellement congelé avec une certaine quantité de particules congelées pour former une friandise congelée ; dans lequel :

- la teneur totale en extrait sec des particules congelées est inférieure à 1 % en poids des particules congelées ;
- la taille moyenne des particules congelées est supérieure à 0,5 mm ; et
- la quantité de particules congelées est choisie de façon que la teneur totale en extrait sec de la friandise congelée soit inférieure à 10 % en poids de la friandise congelée.

2. Procédé selon la revendication 1, dans lequel la teneur en extrait sec de la friandise congelée est inférieure à 8 % en poids.

3. Procédé selon la revendication 1 ou la revendication 2, dans lequel la teneur en extrait sec des particules congelées est inférieure à 0,5 % en poids.

4. Procédé selon la revendication 3, dans lequel les particules congelées sont de la glace.

5. Procédé selon l'une quelconque des revendications précédentes, dans lequel la quantité de particules congelées est de 10 à 70 % en poids de la friandise congelée.

6. Procédé selon l'une quelconque des revendications précédentes, dans lequel la taille moyenne des particules congelées est réduite après qu'elles ont été combinées avec le mélange partiellement congelé.

7. Procédé selon l'une quelconque des revendications précédentes, dans lequel les particules congelées dans la friandise congelée ont une taille moyenne inférieure à 20 mm.

8. Procédé selon la revendication 7, dans lequel les particules congelées dans la friandise congelée ont une taille moyenne de 1 à 5 mm.

9. Procédé selon l'une quelconque des revendications précédentes, dans lequel, dans l'étape (b), le mélange est aéré, si bien que la friandise congelée a un foisonnement d'au moins 20 %.

10. Procédé selon l'une quelconque des revendications précédentes, dans lequel le congélateur dynamique est un congélateur en continu.

11. Procédé selon l'une quelconque des revendications précédentes, dans lequel, après l'étape (d), la friandise congelée est encore congelée à une température inférieure à -10°C.

12. Friandise congelée ayant une teneur totale en extrait sec inférieure à 10 %, comprenant, à -18°C : de 10 à 70 % en poids de particules congelées ayant une teneur totale en extrait sec inférieure à 1 % en poids des particules congelées et une taille moyenne de 0,5 à 20 mm ; et de 10 à 70 % en poids de cristaux de glace ayant une taille moyenne inférieure à 0,25 mm.

13. Friandise congelée selon la revendication 12, ayant une teneur en extrait sec inférieure à 8 % en poids.

14. Friandise congelée selon la revendication 12 ou la revendication 13, dans laquelle les particules congelées ont une taille moyenne de 1 à 5 mm.

15. Friandise congelée selon l'une quelconque des revendications 12 à 14, dans laquelle les cristaux de glace ont une taille moyenne inférieure à 0,1 mm.

16. Friandise congelée selon l'une quelconque des revendications 12 à 15, ayant un foisonnement d'au moins 20 %.

17. Friandise congelée selon l'une quelconque des revendications 12 à 16, dans laquelle les particules congelées sont de la glace.

**Fig. 1.**

Small ice crystals produced in freezer

Air bubbles

Large added ice particles

5kV  X25  1mm  31 33 SEI

EP 1 929 879 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1348341 A
- US 5738889 A
- US 4569209 A
- EP 1051913 A
- WO 06007922 A
- WO 06007923 A

### Non-patent literature cited in the description

- **ROBERT T. MARSHALL ; H. DOUGLAS GOFF ; RICHARD W. HARTEL.** Ice Cream. Kluwer Academic/Plenum Publishers, 2003
- **MARSHALL et al.** Ice Cream. 2003, 296
- **DE CINDIO ; CORRERA.** *Journal of Food Engineering,* 1995, vol. 24, 405-415
- Handbook of Chemistry and Physics. CRC Press
- *Ice Cream,* 186-205
- **C. CLARKE.** The Science of Ice Cream. RSC, 2004, 28-29